# EUROPÄISCHE PATENTANMELDUNG

(11) **EP 2 362 339 A1**
(43) Veröffentlichungstag der Anmeldung: **31.08.2011**
(21) Anmeldenummer: 11155863.1
(22) Anmeldetag: 24.02.2011
(51) Int. Cl.: G06Q 30/00

(54) **Verfahren zur Steuerung von Werbeinhalten in Informationsnetzwerken**

(30) Priorität: 25.02.2010 AT 2982010
(71) Anmelder: Twyn group IT solutions & marketing services AG, 4600 Wels (AT)
(72) Erfinder: Hartl, Christian, 4470, Enns (AT)
(74) Vertreter: KLIMENT & HENHAPEL

(57) **Zusammenfassung**

Die Erfindung betrifft ein Verfahren zur nutzerspezifischen Steuerung von Werbeinhalten in einem Informationsnetzwerk, das Werbetreibende (2), Werbeträger (5), sowie eine Vielzahl an Nutzer (1) umfasst. Das erfindungsgemäße Verfahren bedient sich einer zentralen Steuereinheit (4), die Benutzungsinformationen über den Nutzer (1) und den von ihm kontaktierten Werbetreibenden (2) erfasst. Somit werden anhand der gespeicherten Benutzungsinformationen mögliche Interessensgebiete des jeweiligen Nutzers (1) gesammelt. Bei Zugriff auf die Werbeplattform eines Werbeträgers (5) durch den betreffenden Nutzer (1) wird eine Benutzeranfrage vom Werbeträger (5) an die zentrale Steuereinheit (4) gesendet, um allfällig gespeicherte Benutzungsinformationen abzurufen. Falls Benutzungsinformationen über den betreffenden Nutzer (1) vorliegen, werden diese zur Erstellung nutzerspezifischer Werbeinhalte verwendet, und direkt von der zentralen Steuereinheit (4) an den Werbeträger (5) ausgeliefert. Somit delegiert der Werbeträger (5) die Auslieferung von Werbeinhalten an die zentrale Steuereinheit (4), die gewissermaßen die Funktionen des Adservers (7) des Werbeträgers (5) übernimmt.

## Beschreibung

Die Erfindung betrifft ein Verfahren zur nutzerspezifischen Steuerung von Werbeinhalten in einem Informationsnetzwerk, das Werbetreibende, Werbeträger, sowie eine Vielzahl an Nutzer umfasst, gemäß dem Oberbegriff von Anspruch 1.

Die genannten Informationsnetzwerke umfassen in der Regel zumindest teilweise das Internet, in dem die Werbetreibenden, die Werbeträger, sowie die Nutzer über eine Webpräsenz repräsentiert sind. Die Webpräsenz umfasst dabei zumeist mehrere Webseiten, sowie eine elektronische Erreichbarkeit über e-mail und andere Nachrichtendienste. Allerdings erfährt das Internet zunehmend eine Integration in andere Informationsnetzwerke, wie etwa Telekommunikationsnetzwerke, oder Kabel- und Satellitennetzwerke mit jeweiligen, bidirektionalen Datenverbindungen, die somit zu globalen Informations- und Kommunikationsnetzwerken verschmelzen.

Informationsnetzwerke dieser Art dienen insbesondere gewerblichen Zwecken, indem Werbetreibende ihre Waren und Dienstleistungen der Öffentlichkeit anbieten. Diese öffentlich zugänglichen Bereiche, in denen die Werbetreibenden ihre Waren und Dienstleistungen anbieten, werden im Folgenden als Informationsplattform bezeichnet. Eine solche Informationsplattform kann etwa durch ihre Webpräsenz im Internet gebildet werden, also in physischer Hinsicht durch einen Speicherplatz auf einem öffentlich zugänglichen Server, der für die Nutzer über die entsprechende Webadresse, im Wesentlichen eine IP-Adresse, erreichbar ist.

Als Werbeträger werden im folgenden Teilnehmer des Informationsnetzwerkes verstanden, die in den für sie reservierten Bereichen des Informationsnetzwerkes den Werbetreibenden die Möglichkeit zur Darstellung von Werbeinhalten, zumeist entgeltlich, bieten. Dabei handelt es sich etwa um Anbieter von Inhalten von allgemeinem Interesse, also etwa um Anbieter von sozialen Netzwerken wie Facebook, Twitter, usw., oder von Informationsportalen für Nachrichten und dergleichen. Diese Bereiche der Werbeträger werden im Folgenden als Werbeplattform bezeichnet, die etwa ebenfalls durch die Webpräsenz der Werbeträger im Internet gebildet werden, also in physischer Hinsicht wiederum durch einen Speicherplatz auf einem öffentlich zugänglichen Server, der für die Nutzer über die entsprechende Webadresse, im Wesentlichen eine IP-Adresse, erreichbar ist. Die Werbeinhalte werden auf den Werbeplattformen etwa durch so genannte Werbebanner verschiedener Größe angezeigt, die dem Nutzer über seinen Browser bei einem Zugriff auf die Werbeplattform angezeigt werden. Dabei ist der Werbebanner in die Webseiten der Werbeplattform integriert. Es ist aber auch möglich, dass etwa im Zuge zukünftiger, interaktiver Fernsehanwendungen Werbeinhalte auch in nutzerspezifischer Art bei der Wiedergabe von Fernsehprogrammen und dergleichen angezeigt werden. Gemäß bekanntem Stand der Technik wird bei Werbeplattformen im Internet ein Content-Server für Inhalte und ein Adserver für Werbeinhalte verwendet. Der Content-Server steuert dabei die Anzeige von z.B. Nachrichten auf den Webseiten des Werbeträgers, und der Adserver die Erstellung und Wiedergabe der Werbeinhalte.

Elektronische Informationsnetzwerke der genannten Art bieten im Vergleich zu Printmedien oder Rundfunk und Fernsehen die Möglichkeit, Werbeinhalte nutzerspezifisch auszuliefern, da der Kontakt zwischen Nutzer, Werbetreibenden und Werbeträgern über bidirektionale Datenverbindungen erfolgt, über die der Nutzer identifizierbar wird. Somit erreicht etwa der Werbetreibende trotz einer Vielzahl an Werbekontakten überwiegend desinteressierte Nutzer, was auch als "Streuverlust" bezeichnet wird, wodurch finanzielle Ressourcen falsch eingesetzt werden, da jeder Werbekontakt zumeist mit Kosten verbunden ist. Andererseits empfindet der Nutzer die Mehrzahl an Werbekontakten im Internet geradezu als Belästigung, da er an den angebotenen Werbeinhalten keinerlei Interesse zeigt. In diesem Fall erleidet nicht nur der entsprechende Werbetreibende, sondern letztendlich auch der Werbeträger Imageverluste, die sich in ökonomischen Verlusten äußern können.

Es ist somit das Ziel der Erfindung, eine nutzerspezifische Steuerung von Werbeinhalten zu ermöglichen bzw. zu verbessern. Dadurch soll es einerseits dem Werbetreibenden ermöglicht werden, Werbeinhalte gezielter auszuliefern, um somit bei geringerem, finanziellem Aufwand potentielle Käufer effektiver anzusprechen. Andererseits soll aber auch der Nutzer durch unerwünschte Werbeinhalte, die seine Interessen in keiner Weise widerspiegeln, verschont bleiben. Somit soll für alle Beteiligten eine effizientere Nutzung der genannten Informationsnetzwerke ohne unnötigen Einsatz von Zeit- und Geldressourcen ermöglicht werden.

Diese Ziele werden durch die Merkmale von Anspruch 1 erreicht. Anspruch 1 bezieht sich hierbei auf ein Verfahren zur nutzerspezifischen Steuerung von Werbeinhalten in einem Informationsnetzwerk, das Werbetreibende, Werbeträger, sowie eine Vielzahl an Nutzer umfasst, wobei die Nutzer über bidirektionale Datenverbindungen mit Informationsplattformen in Form abrufbarer Daten der Werbetreibenden, sowie mit Werbeplattformen in Form abrufbarer Daten der Werbeträger verbunden sind, wobei die Bereitstellung von Information durch Zugriff auf die Informationsplattformen und die Werbeplattformen durch die Nutzer erfolgt, und die Werbeinhalte in die Daten der Werbeträger auf ihren jeweiligen Werbeplattformen integriert werden. Erfindungsgemäß wird vorgeschlagen, dass mit der Bereitstellung der Information durch Zugriff auf eine Informationsplattform eines Werbetreibenden durch einen Nutzer -) in einem ersten Verfahrensschritt eine Benutzungsinformation über den Nutzer und den Werbetreibenden an eine zentrale Steuereinheit, sowie an den Nutzer gesendet und beim Nutzer und der zentralen Steuereinheit gespeichert wird, -) in einem zweiten Verfahrensschritt die Benutzungsinformation bei nachfolgendem Zugriff auf eine Werbeplattform eines Werbeträgers durch den Nutzer vom Nutzer an den Werbeträger übermittelt wird, und in weiterer Folge anhand der Benutzungsinformation eine Benutzeranfrage vom Werbeträger an die zentrale Steuereinheit gesendet wird, wobei die zentrale Steuereinheit die Benutzeranfrage mit ihren gespeicherten Benutzungsinformationen vergleicht, und -) in einem dritten Verfahrensschritt bei Wiedererkennung des Nutzers mithilfe der gespeicherten Benutzungsinformation von der zentralen Steuereinheit nutzerspezifische Werbeinhalte erstellt und an den Werbeträger zur Ausgabe an den Nutzer übermittelt werden.

Das erfindungsgemäße Verfahren bezieht somit auch eine zentrale Steuereinheit ein, die Benutzungsinformationen über den Nutzer und den von ihm kontaktierten Werbetreibenden erfasst. Somit werden anhand der gespeicherten Benutzungsinformationen mögliche Interessensgebiete des jeweiligen Nutzers gesammelt. Bei Zugriff auf die Werbeplattform eines Werbeträgers durch den betreffenden Nutzer wird eine Benutzeranfrage vom Werbeträger an die zentrale Steuereinheit gesendet, um allfällig gespeicherte Benutzungsinformationen abzurufen. Falls Benutzungsinformationen über den betreffenden Nutzer vorliegen, werden diese zur Erstellung nutzerspezifischer Werbeinhalte verwendet.

Wie im Folgenden noch im Detail erläutert werden wird, erfolgt somit die Auswahl und Auslieferung der nutzerspezifischen Werbeinhalte nicht mehr durch den Adservers des Werbeträgers selbst, sondern durch die zentrale Steuereinheit eines externen Diensteanbieters, der die Benutzungsinformationen über die Nutzer sammelt und entsprechend auswertet. Dadurch werden eine Vielzahl an Marketingmethoden anwendbar, etwa im Rahmen dynamischer Dialogstrecken mit linearem, progressivem oder degressivem Werbedruck, die im Stand der Technik durch die Möglichkeiten der Werbeträger nicht nutzbar sind.

Dabei soll der Nutzer keineswegs überwacht werden, zudem wäre eine konkrete Identifizierung des Nutzers aus Datenschutzgründen auch nicht erwünscht. Daher wird gemäß einer bevorzugten Weiterbildung der Erfindung vorgeschlagen, dass die den Nutzer betreffenden Inhalte der Benutzungsinformation anonymisiert erstellt werden. Insbesondere ermöglicht das erfindungsgemäße Verfahren die Wiedererkennung eines Nutzers, ohne personenbezogene Daten des Nutzers zu verwenden, oder seine IP-Adresse heranzuziehen, da die Benutzungsinformation für eine nutzerspezifische Steuerung der Werbeinhalte im Wesentlichen lediglich Information über die kontaktierten Werbetreibenden enthalten muss, nicht aber über den Nutzer selbst.

Das Informationsnetzwerk kann zumindest teilweise durch das Internet gebildet werden. In diesem Fall kann es sich bei der Informationsplattform eines Werbetreibenden um seine Webpräsenz im Internet handeln, und bei der Werbeplattform eines Werbeträgers um seine Webpräsenz im Internet. Die Benutzungsinformation über den Nutzer und den Werbetreibenden wird dabei im Rahmen des ersten Verfahrensschrittes etwa von einer Dotierungssoftware erstellt, die in den Webseiten der Webpräsenz des Werbetreibenden eingebettet ist.

Hinsichtlich der Verarbeitung der Benutzungsinformation wird gemäß einer ersten Ausführungsform vorgeschlagen, dass im ersten Verfahrensschritt die Benutzungsinformation von der Dotierungssoftware an die zentrale Steuerungseinrichtung gesendet wird, die in weiterer Folge ein Dotierungs-Cookie erstellt, das dem Nutzer übermittelt und in den Browser-Cookies des Nutzers gespeichert wird. Bei nachfolgendem Zugriff auf eine Werbeplattform eines Werbeträgers durch den Nutzer wird das Dotierungs-Cookie vom Nutzer an den Werbeträger übermittelt, wobei eine Erkennungssoftware, die in den Webseiten der Webpräsenz des Werbeträgers eingebettet ist, das übermittelte Dotierungs-Cookie erkennt und im Rahmen des zweiten Verfahrensschrittes die Benutzeranfrage an die zentrale Steuereinheit erstellt. Die Erkennungssoftware auf der Werbeplattform wird im Folgenden auch als "Sensor" bezeichnet, da er feststellt, ob ein zugreifender Nutzer eine erfindungsgemäße Benutzungsinformation übergibt, und sich somit für eine Benutzeranfrage eignet. Hierbei ist zu bemerken, dass der Werbeträger das Benutzungscookie selbst noch nicht auslesen kann, da es von der zentralen Steuereinheit erstellt und im Browser des Nutzers abgelegt wurde.

Beim Navigieren durch die weiteren Webseiten des Werbeträgers im Rahmen ein und desselben Besuches der Webpräsenz des Werbeträgers durch denselben Nutzer soll der Werbeträger den Nutzer aber bereits selbst erkennen können. Daher wird vorgeschlagen, dass im zweiten Verfahrensschritt bei Wiedererkennung des Nutzers durch die zentrale Steuereinheit ein Steuerungsbefehl zur Erstellung eines Adserver-Cookies an einen Adserver des Werbeträgers übermittelt wird, das vom Adserver dem Nutzer übermittelt und in den Browser-Cookies des Nutzers gespeichert wird. Dadurch wird es möglich, dass im dritten Verfahrensschritt bei nachfolgenden Zugriffen auf die Werbeplattform des Werbeträgers durch den Nutzer der Adserver des Werbeträgers das Adserver-Cookie erkennt, und mithilfe des Adserver-Cookies ein Tag-in-Tag erstellt, mit dem der Adserver des Werbeträgers die Übermittlung von Werbeinhalten an die zentrale Steuereinheit delegiert.

Im Rahmen dieser ersten Ausführungsform ist es somit erforderlich, dass der Werbeträger eine Erkennungssoftware in seine Webpräsenz integriert, die in der Regel auf einem so genannten Content-Server des Werbeträgers gespeichert ist. Dieser Vorgang wird in der Praxis durch den Diensteanbieter des erfindungsgemäßen Verfahrens und Betreiber der zentralen Steuereinheit erfolgen. Da die Werbeträger mitunter nicht zu einem solchen Eingriff in ihre Webpräsenz durch externe Anbieter bereit sind, wird eine zweite Ausführungsform des erfindungsgemäßen Verfahrens vorgeschlagen, die keine Erkennungssoftware vorsieht.

Diese zweite Ausführungsform sieht gewissermaßen eine Integration des ersten und zweiten Verfahrensschrittes vor, indem die Benutzungsinformation von der Dotierungssoftware an die zentrale Steuerungseinrichtung gesendet wird, die in weiterer Folge einen Steuerungsbefehl zur Erstellung eines Adserver-Cookies an die Adserver der Werbeträger übermittelt, das vom jeweiligen Adserver dem Nutzer übermittelt und in den Browser-Cookies des Nutzers gespeichert wird. Dieses Adserver-Cookie kann bei späteren Zugriffen des Nutzers auf die Webpräsenz des jeweiligen Werbeträgers vom Werbeträger selbst unmittelbar erkannt werden. Somit wird es möglich, dass im dritten Verfahrensschritt bei einem nachfolgenden Zugriff auf die Werbeplattform eines Werbeträgers durch den Nutzer der jeweilige Adserver des betreffenden Werbeträgers das Adserver-Cookie erkennt, und mithilfe des Adserver-Cookies ein Tag-in-Tag erstellt, mit dem der jeweilige Adserver des betreffenden Werbeträgers die Übermittlung von Werbeinhalten an die zentrale Steuerungseinrichtung delegiert.

Um den Eindruck einer Überwachung des Nutzers zu vermeiden, kann außerdem die Übermittlung der nutzerspezifischen Werbeinhalte von der zentralen Steuereinheit an die Werbeplattform des Werbeträgers erst nach Ablauf einer vorgegebenen Zeitspanne ab dem Aufruf der Informationsplattform des Werbetreibenden durch den Nutzer erfolgen. Dadurch wird vermieden, dass Werbeinhalte, die in einem Zusammenhang mit unmittelbar zuvor besuchten Informationsplattformen von Werbetreibenden stehen, zu rasch an den betreffenden Nutzer ausgeliefert werden. Eine solche Präsentation von Werbeinhalten würde vom Nutzer wohl als unheimlich empfunden werden. Eine solche verzögerte Auslieferung von nutzerspezifischen Werbeinhalten ist im Rahmen der ersten Ausführungsform des erfindungsgemäßen Verfahrens leicht möglich, da die Benutzungsinformation und das Dotierungs-Cookie eine Zeitangabe über den Besuch einer Informationsplattform eines Werbetreibenden enthalten, die von der zentralen Steuereinheit ausgelesen werden kann. Die zentrale Steuereinheit ist in der Regel ein Server, der für diese Aufgabe entsprechend konfiguriert werden kann. Im zweiten Verfahrensschritt kann somit die zentrale Steuereinheit leicht überprüfen, ob die vorgegebene Zeitspanne für die verzögerte Auslieferung nutzerspezifischer Werbeinhalte bereits abgelaufen ist. Im Rahmen der zweiten Ausführungsform des erfindungsgemäßen Verfahrens ist das jedoch nicht möglich, da herkömmliche Adserver eine solche Zeitangabe nicht auslesen und darauf reagieren können. Daher kann bei einem Zugriff eines Nutzers auf die Webpräsenz des Werbeträgers der Adserver des Werbeträgers alleine anhand des übermittelten Adserver-Cookies nicht feststellen, ob die vorgegebene Zeitspanne für die verzögerte Auslieferung nutzerspezifischer Werbeinhalte bereits abgelaufen ist.

Daher wird für die zweite Ausführungsform vorgeschlagen, dass gleichzeitig mit der Erstellung des Adserver-Cookies ein Sperr-Cookie erstellt wird, das vom jeweiligen Adserver dem Nutzer übermittelt und in den Browser-Cookies des Nutzers gespeichert wird, wobei das Sperr-Cookie eine vorgegebene Zeitspanne enthält, nach der sich das Sperr-Cookie löscht. Somit wird anhand der Existenz eines Sperr-Cookies beim Nutzer überprüfbar, ob eine vorgegebene Zeitspanne bereits abgelaufen ist. In weiterer Folge kann daher vorgesehen sein, dass im dritten Verfahrensschritt bei einem nachfolgenden Zugriff auf die Werbeplattform eines Werbeträgers durch den Nutzer vor Ablauf der vorgegebenen Zeitspanne und der damit verbundenen Übermittlung des Sperr-Cookies der jeweilige Adserver des betreffenden Werbeträgers die Übermittlung von Werbeinhalten hemmt, und nur bei fehlender Übermittlung des Sperr-Cookies mithilfe des Adserver-Cookies ein Tag-in-Tag erstellt, mit dem der jeweilige Adserver des betreffenden Werbeträgers die Übermittlung von Werbeinhalten an die zentrale Steuerungseinrichtung delegiert.

Die Erfindung wird im Folgenden anhand dieser beiden Ausführungsbeispiele mithilfe der beiliegenden Figuren näher erläutert. Es zeigen hierbei die
Fig. 1 eine schematische Darstellung der Interaktion zwischen Nutzer und einer von ihm aufgesuchten Informationsplattform, die den ersten Verfahrensschritt (so genannter "Dotierungsprozess") im Rahmen der ersten Ausführungsform des erfindungsgemäßen Verfahrens erläutert,
Fig. 2 eine schematische Darstellung der Interaktion zwischen Nutzer, einer von ihm aufgesuchten Werbeplattform, sowie der zentralen Steuereinheit, die den zweiten Verfahrensschritt (so genannter "Retargetingprozess") für die erste Ausführungsform des erfindungsgemäßen Verfahrens erläutert,
Fig. 3 eine schematische Darstellung der Interaktion zwischen Nutzer, einer von ihm aufgesuchten Werbeplattform, sowie der zentralen Steuereinheit, die den dritten Verfahrensschritt für die erste Ausführungsform des erfindungsgemäßen Verfahrens erläutert,
Fig. 4 eine schematische Darstellung der Interaktion zwischen Nutzer und einer von ihm aufgesuchten Informationsplattform, die den Dotierungsprozess im Rahmen der zweiten Ausführungsform des erfindungsgemäßen Verfahrens erläutert, und die
Fig. 5 eine schematische Darstellung der Interaktion zwischen Nutzer, einer von ihm aufgesuchten Werbeplattform, sowie der zentralen Steuereinheit, die den Retargetingprozess für die zweite Ausführungsform des erfindungsgemäßen Verfahrens erläutert.

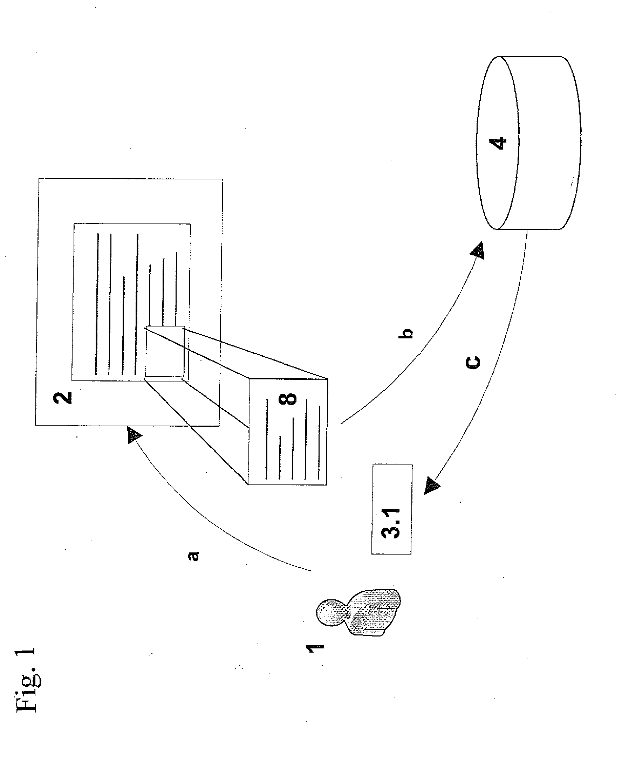

Zunächst wird festgestellt, dass die Fig. 1 bis 5 jeweils Ausführungsformen zeigen, bei der das Informationsnetzwerk zur Gänze aus dem Internet gebildet wird. Wie bereits erwähnt wurde, erfährt das Internet aber zunehmend eine Integration in andere Informationsnetzwerke, wie etwa Telekommunikationsnetzwerke, oder Kabel- und Satellitennetzwerke mit jeweiligen, bidirektionalen Datenverbindungen, die somit zu globalen Informations- und Kommunikationsnetzwerken verschmelzen. Das erfindungsgemäße Verfahren ist somit prinzipiell nicht auf die hier dargestellte Implementierung im Rahmen der Internet-Technologie beschränkt.

Zur Erläuterung einer ersten Ausführungsform des erfindungsgemäßen Verfahrens wird zunächst auf die Fig. 1 bis 3 Bezug genommen. Die Fig. 1 erläutert dabei den ersten Verfahrensschritt, den so genannten Dotierungsprozess. Der Nutzer 1 bewegt sich dabei etwa mithilfe eines Browsers im Informationsnetzwerk und ruft mit dessen Hilfe die auf Informationsplattformen von Werbetreibenden 2 gespeicherten Daten ab (Teilschritt "a" in der Fig. 1). Der Nutzer 1 wird in weiterer Folge im Zuge des Aufrufs der Informationsplattform eines Werbetreibenden 2, in der Regel eine Webseite, markiert ("dotiert"), indem von einer Dotierungssoftware 8, die in den Webseiten der Webpräsenz des Werbetreibenden 2 eingebettet ist, eine Benutzungsinformation über den Nutzer 1 und den Werbetreibenden 2, sowie Art und Zeitpunkt des Zugriffs auf die Informationsplattform erstellt wird. Bei der Dotierungssoftware 8 handelt es sich etwa um ein "Tracking-Script", das in die Informationsplattform des Werbetreibenden 2 integriert ist. In der Benutzungsinformation sind anonymisiert und verschlüsselt Werte über das Verhalten des Nutzers 1 und die besuchte Informationsplattform, etwa Anzahl der Klicks, Anzahl der Views, oder Datum des letzten Zugriffs, enthalten. Die Benutzungsinformation wird von der Dotierungssoftware 8 an die zentrale Steuereinheit 4 gesendet und dort gespeichert (Teilschritt "b" in der Fig. 1). Die zentrale Steuereinheit 4 verarbeitet diese Benutzungsinformation und verwendet sie für den so genannten "Retargetingprozess", über den ein Nutzer 1 in weiterer Folge wieder erkannt werden soll. Dabei können auch Vorhersagen über das wahrscheinlichste Verhalten des Nutzers 1 getroffen werden, indem dessen Verhalten analysiert, ausgewertet und im Rahmen des so genannten "Predictive Marketing" statistische Aussagen (Datamining) über potentiell interessante Produkte erstellt werden.

Die zentrale Steuereinheit 4 erstellt in weiterer Folge ein Dotierungs-Cookie 3.1, das dem Nutzer 1 übermittelt und in den Browser-Cookies des Nutzers 1 gespeichert wird (Teilschritt "c" in der Fig. 1). Cookies bezeichnen in herkömmlicher Weise Informationen, die ein Webserver zum Browser des Nutzers 1 sendet, oder die seitens des Nutzers 1 durch ein JavaScript erzeugt werden. In herkömmlicher Weise sendet der Nutzer 1 diese Informationen in der Regel bei späteren Zugriffen an denselben Webserver im HTTP-Header an den Webserver. Hierbei ist wesentlich, dass ein Cookie nur von demjenigen Server gelesen und ausgewertet werden kann, der es auch erstellt hat. Das erfindungsgemäße Verfahren sieht dabei keine Speicherung persönlicher Daten in Cookies vor, stattdessen werden alle Daten anonymisiert und verschlüsselt abgespeichert. Die erstellten Cookies ermöglichen im Rahmen des erfindungsgemäßen Verfahrens auch eine Wiedererkennung des Nutzers 1, ohne dabei personenbezogene Daten über den Nutzer 1, insbesondere dessen IP-Adresse, zu speichern oder auszuwerten. Der Nutzer 1 kann die Ausführung des erfindungsgemäßen Verfahrens somit auch unterbinden, indem er entweder keine Cookies akzeptiert, was durch eine entsprechende Einstellung seines Browsers erreicht werden kann, Cookies auf seinem Rechner löscht, oder über den Anbieter des erfindungsgemäßen Verfahrens seinen entsprechenden Wunsch äußert.

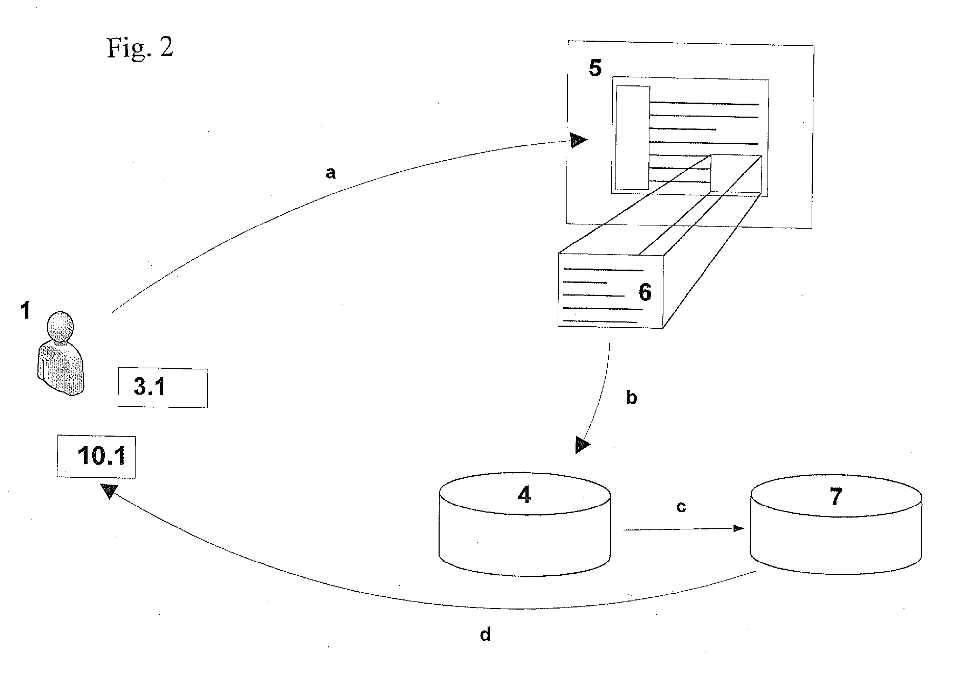

Nunmehr wird auf die Fig. 2 Bezug genommen, die zur Erläuterung des zweiten Verfahrensschrittes, den so genannten "Retargetingprozess", eine schematische Darstellung der Interaktion zwischen Nutzer 1, einer von ihm aufgesuchten Werbeplattform eines Werbeträgers 5, sowie der zentralen Steuereinheit 4 zeigt. Um einen Nutzer 1 wieder zu erkennen, ist in allen Webseiten des Werbeträgers 5 gemäß einer ersten Ausführungsform eine Erkennungssoftware 6, integriert, die im Folgenden als Sensor bezeichnet wird. Der Sensor erkennt ein vom Nutzer 1 übermitteltes Dotierungs-Cookie 3.1 im Zuge eines Zugriffs auf eine Webseite des Werbeträgers 5 (Teilschritt "a" in der Fig. 2), und sendet in weiterer Folge eine Benutzeranfrage an die zentrale Steuereinheit 4 um festzustellen, ob für den betreffenden Nutzer 1 eine Benutzungsinformation hinterlegt ist (Teilschritt "b" in der Fig. 2). Im positiven Fall wird bei Wiedererkennung des Nutzers 1 durch die zentrale Steuereinheit 4 ein Steuerungsbefehl zur Erstellung eines Adserver-Cookies 10.1 an einen Adserver 7 des Werbeträgers 5 übermittelt (Teilschritt "c" in der Fig. 2). Das vom Adserver 7 erstellte Adserver-Cookie 10.1 wird in weiterer Folge dem Nutzer 1 übermittelt und in den Browser-Cookies des Nutzers 1 gespeichert (Teilschritt "d" in der Fig. 2). Mithilfe des Adserver-Cookies 10.1 wird der Nutzer 1 beim weiteren Navigieren durch die Webseiten des Werbeträgers 5 durch den Adserver 7 des Werbeträgers 5 erkennbar.

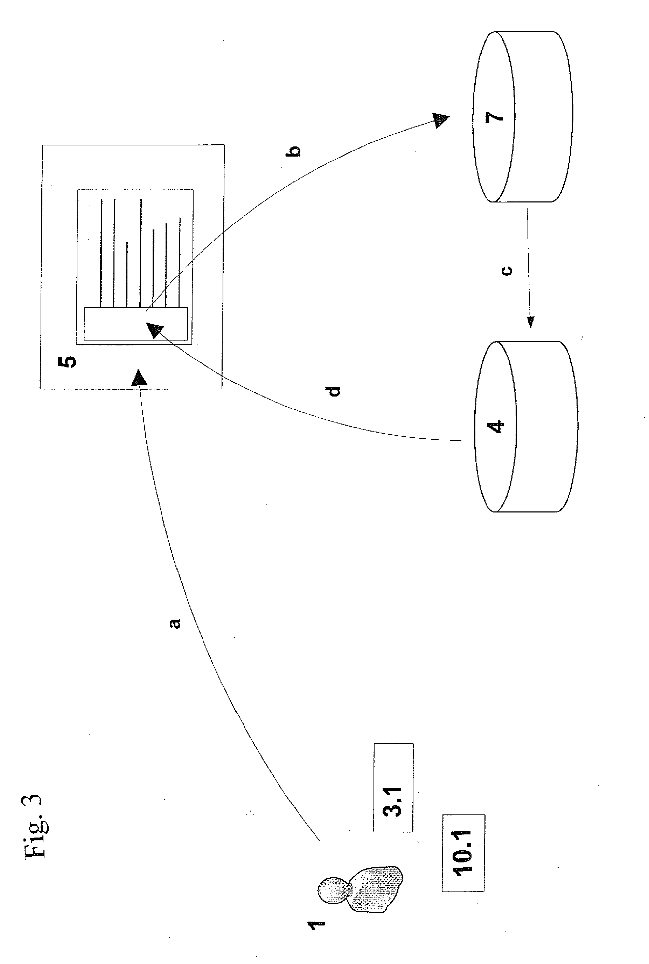

Nunmehr wird auf die Fig. 3 Bezug genommen, die den dritten Verfahrensschritt im Rahmen der ersten Ausführungsform des erfindungsgemäßen Verfahrens zeigt. Beim Zugriff auf weitere Webseiten des Werbeträgers 5 durch den Nutzer 1 (Teilschritt "a" in der Fig. 3) erkennt der Adserver 7 des Werbeträgers 5 das Adserver-Cookie 10.1, und erstellt mithilfe des Adserver-Cookies 10.1 ein Tag-in-Tag, mit dem der Adserver 7 des Werbeträgers 5 die Übermittlung von Werbeinhalten an die zentrale Steuereinheit 4 delegiert (Teilschritte "b" und "c" in der Fig. 3).

Die zentrale Steuereinheit 4 entscheidet nun, welche Werbeinhalte zur Auslieferung gelangen. Falls nutzerspezifische Werbeinhalte ausgeliefert werden sollen, erstellt die zentrale Steuereinheit 4 ein Delivery-Tag, das insbesondere Angaben über die Integration der Werbeinhalte in die Werbeplattform des Werbeträgers 5 enthält. In der Regel wird hierzu auch die zentrale Steuereinheit 4 einen Adserver aufweisen (in der Fig. 3 nicht dargestellt), der den Delivery-Tag entgegen nimmt. Die Antwort des Delivery-Tags ist ein Javascript, das über den Adserver der zentralen Steuereinheit 4 den eigentlichen Image-Tag in den Quelltext der Webseiten des Werbeträgers 5 schreibt, und damit in Folge das passende Werbemittel entlang einer dynamischen Dialogstrecke ausliefert. Somit delegiert der Adserver 7 des Werbeträgers 5 die Auslieferung von Werbeinhalten an die zentrale Steuereinheit 4, die gewissermaßen die Funktionen des Adservers 7 des Werbeträgers 5 übernimmt (Teilschritt "d" in der Fig. 3).

Um den Eindruck einer Überwachung des Nutzers 1 zu vermeiden, kann außerdem die Übermittlung der nutzerspezifischen Werbeinhalte von der zentralen Steuereinheit 4 an die Werbeplattform des Werbeträgers 5 erst nach Ablauf einer vorgegebenen Zeitspanne ab dem Aufruf der Informationsplattform des Werbetreibenden 2 durch den Nutzer 1 erfolgen. Dadurch wird so genanntes "Scary Advertising" vermieden, also das zu rasche Ausliefern von Werbeinhalten auf Basis unmittelbar zuvor aufgerufener Webseiten.

Eine solche verzögerte Auslieferung von nutzerspezifischen Werbeinhalten ist im Rahmen der ersten Ausführungsform des erfindungsgemäßen Verfahrens leicht möglich, da die Benutzungsinformation und das Dotierungs-Cookie 3.1 eine Zeitangabe über den Besuch einer Informationsplattform eines Werbetreibenden 2 enthalten, die von der zentralen Steuereinheit 4 ausgelesen werden kann. Die zentrale Steuereinheit 4 ist in der Regel ein Server, der für diese Aufgabe entsprechend konfiguriert werden kann. Im zweiten Verfahrensschritt kann somit die zentrale Steuereinheit 4 leicht überprüfen, ob die vorgegebene Zeitspanne für die verzögerte Auslieferung nutzerspezifischer Werbeinhalte bereits abgelaufen ist.

Die Auslieferung der Werbeinhalte selbst kann wiederum von der zentralen Steuereinheit 4 in geeigneter Weise festgelegt werden, etwa in Form verschiedener Motive einer Werbekampagne wie Banner, Videos, oder interaktive Elemente. Da die zentrale Steuereinheit 4 über umfangreiche Benutzungsinformationen über die Nutzer 1 verfügt, werden eine Vielzahl an Marketingmethoden anwendbar, etwa im Rahmen dynamischer Dialogstrecken mit linearem, progressivem oder degressivem Werbedruck, die im Stand der Technik durch die Möglichkeiten der Werbeträger 5 nicht nutzbar sind. Falls etwa bei einem Nutzer 1 von der zentralen Steuereinheit 4 Zugriffe auf Informationsplattformen unterschiedlicher Werbetreibende 2 derselben Branche, etwa Autohändler oder -hersteller, festgestellt wird, die alle eine Werbekampagne ausliefern möchten, so kann die zentrale Steuereinheit 4 etwa feststellen, bei welchem Werbetreibenden 2 der letzte Zugriff erfolgte, oder bei welchem Werbetreibenden 2 die meisten Zugriffe erfolgten, um auf diese Weise das größte Interesse eines Nutzers 1 etwa für eine bestimmte Automarke zu ermitteln, und die entsprechende Werbekampagne auszuliefern. Die Auslieferung dieser Werbekampagne kann in weiterer Folge etwa linear erfolgen, indem über einen festgelegten Zeitraum bei Zugriffen auf die Webseiten unterschiedlicher Werbeträger 5 eine festgelegte Anzahl von Darstellungen von Werbesujets erfolgt. Die Auslieferung einer Werbekampagne kann auch degressiv sein, indem zunächst eine erhöhte Anzahl von Darstellungen eines Werbesujets erfolgt, die im Laufe einer festgelegten Zeitspanne abnimmt. Sie kann aber auch progressiv erfolgen, indem eine zunächst niedrige Anzahl von Darstellungen eines Werbesujets im Laufe einer festgelegten Zeitspanne zunimmt. Im Rahmen einer dynamischen Dialogstrecke können aber auch die Werbesujets im Laufe einer Werbekampagne variieren, indem im Laufe der Zugriffe auf die Webseiten von Werbeträgern 5 unterschiedliche Videos, Banner, interaktive Elemente und dergleichen dem Nutzer 1 dargeboten werden. Des Weiteren ist auch die Dauer der Auslieferung einer Werbekampagne steuerbar, indem etwa die Auslieferung von nutzerspezifischen Werbeinhalten auf das Navigationsverhalten des Nutzers 1 abgestimmt wird. Falls etwa von der zentralen Steuereinheit 4 festgestellt wird, dass ein Nutzer 1 keine Zugriffe auf die Webseiten von Werbetreibenden 2 einer Branche, etwa Autohändler oder -hersteller, tätigt, so kann die Auslieferung der entsprechenden Werbekampagne erhöht oder gedrosselt werden, da der Nutzer 1 offenbar sein Interesse am Angebot dieser Werbetreibenden 2 zu verlieren droht, oder bereits verloren hat. Bei der Steuerung der Ausgabe nutzerspezifischer Werbeinhalte kann dabei eine Vielzahl an Parameter einbezogen werden, etwa die Anzahl der Klicks, Views oder die Verweildauer auf Webseiten von Werbetreibenden 2.

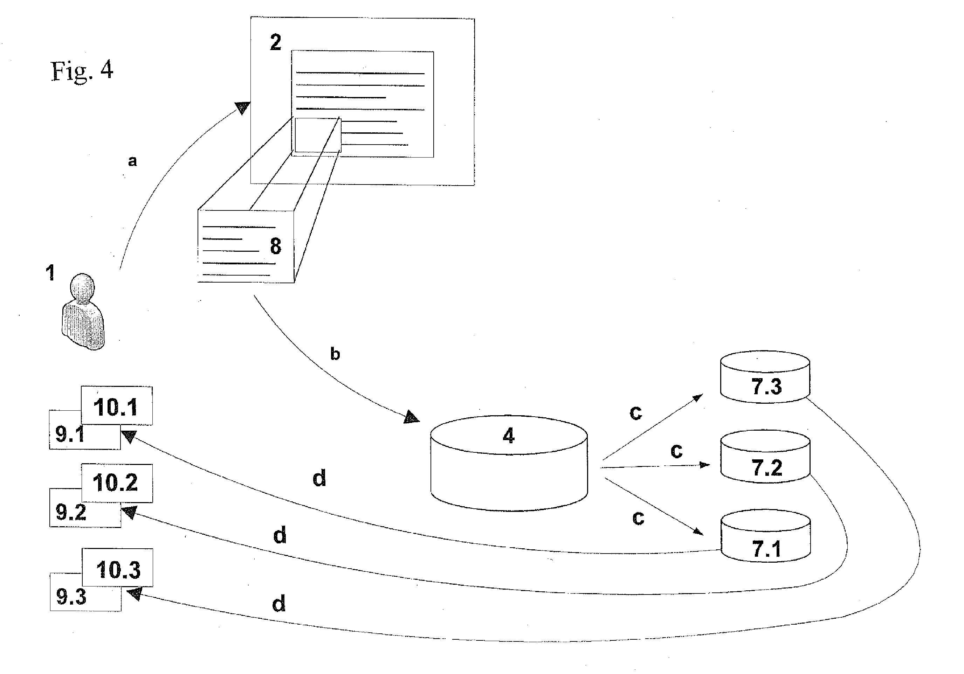

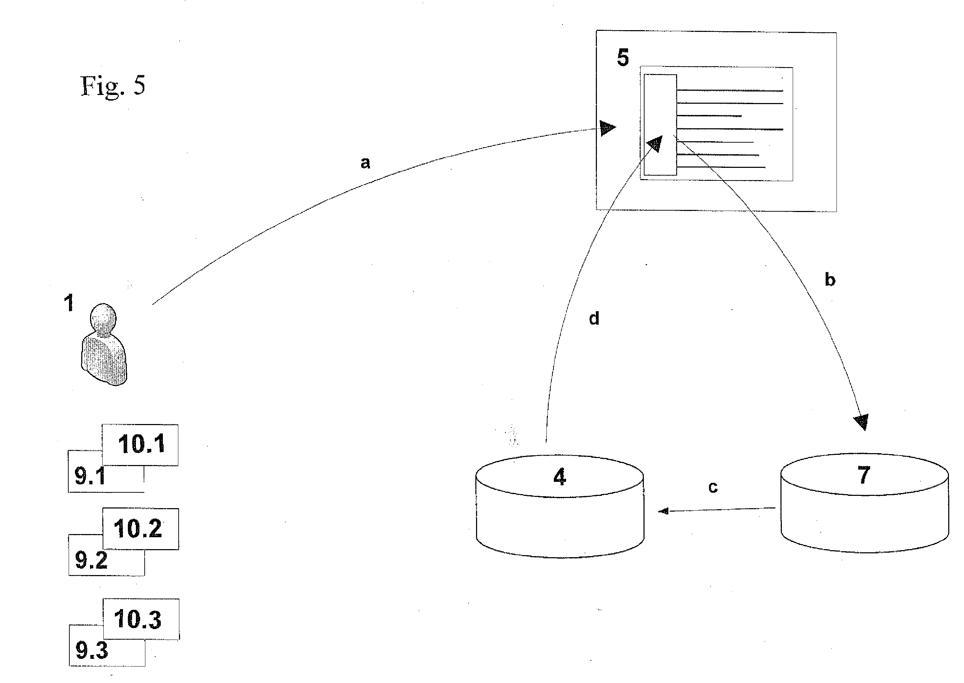

Die anhand der Fig. 1-3 beschriebene, erste Ausführungsform des erfindungsgemäßen Verfahrens sieht die Einbindung einer Erkennungssoftware 6 in die Webseiten eines Werbeträgers 5 vor. Wie bereits erwähnt wurde, sind die Werbeträger 5 aber mitunter nicht zu einem solchen Eingriff in ihre Webpräsenz durch externe Anbieter bereit, sodass eine zweite Ausführungsform des erfindungsgemäßen Verfahrens vorgeschlagen wird, die keine Erkennungssoftware 6 vorsieht. Diese zweite Ausführungsform wird im Folgenden anhand der Fig. 4 und 5 erläutert.

Die Fig. 4 erläutert dabei zunächst den Dotierungsprozess. In analoger Weise zur Fig. 1 bewegt sich der Nutzer 1 wiederum mithilfe eines Browsers im Informationsnetzwerk und ruft mit dessen Hilfe die auf Informationsplattformen von Werbetreibenden 2 gespeicherten Daten ab (Teilschritt "a" in der Fig. 4). Der Nutzer 1 wird in weiterer Folge im Zuge des Aufrufs der Informationsplattform eines Werbetreibenden 2, in der Regel eine Webseite, markiert, indem von einer Dotierungssoftware 8, die in den Webseiten der Webpräsenz des Werbetreibenden 2 eingebettet ist, eine Benutzungsinformation über den Nutzer 1 und den Werbetreibenden 2, sowie Art und Zeitpunkt des Zugriffs auf die Informationsplattform erstellt wird. Die Benutzungsinformation wird von der Dotierungssoftware 8 an die zentrale Steuereinheit 4 gesendet und dort gespeichert (Teilschritt "b" in der Fig. 4). Die zentrale Steuereinheit 4 verarbeitet diese Benutzungsinformation und verwendet sie für den so genannten "Retargetingprozess", über den ein Nutzer 1 in weiterer Folge wieder erkannt werden soll. Der Retargetingprozess wird im Rahmen der zweiten Ausführungsform aber nun auf andere Weise bewerkstelligt, indem die zentrale Steuereinheit 4 einen Steuerungsbefehl zur Erstellung eines Adserver-Cookies 10.1, 10.2, 10.3 an die jeweiligen Adserver 7.1, 7.2, 7.3 der teilnehmenden Werbeträger 5 übermittelt (Teilschritt "c" in der Fig. 4). Das vom jeweiligen Adserver 7.1, 7.2, 7.3 erstellte Adserver-Cookie 10.1, 10.2, 10.3 wird in weiterer Folge dem Nutzer 1 übermittelt und in den Browser-Cookies des Nutzers 1 gespeichert. Gleichzeitig mit der Erstellung des Adserver-Cookies 10.1, 10.2, 10.3 wird ein Sperr-Cookie 9.1, 9.2, 9.3 erstellt, das ebenfalls vom jeweiligen Adserver 7.1, 7.2, 7.3 dem Nutzer 1 übermittelt und in den Browser-Cookies des Nutzers 1 gespeichert wird (Teilschritt "d" in der Fig. 4). Das Sperr-Cookie 9.1, 9.2, 9.3 enthält eine vorgegebene Zeitspanne, nach der sich das Sperr-Cookie 9.1, 9.2, 9.3 selbständig löscht. Somit wird anhand der Existenz eines Sperr-Cookies 9.1, 9.2, 9.3 beim Nutzer 1 überprüfbar, ob eine vorgegebene Zeitspanne bereits abgelaufen ist. Mithilfe des Adserver-Cookies 10.1, 10.2, 10.3 wird der Nutzer 1 beim weiteren Navigieren durch die Webseiten des jeweiligen Werbeträgers 5 durch den betreffenden Adserver 7.1, 7.2, 7.3 des Werbeträgers 5 erkennbar, ohne dass hierfür eine Erkennungssoftware 6 erforderlich wäre. Diese zweite Ausführungsform sieht gewissermaßen eine Integration des ersten und zweiten Verfahrensschrittes vor.

Anhand der Fig. 5 wird der dritte Verfahrensschritt im Rahmen der zweiten Ausführungsform des erfindungsgemäßen Verfahrens erläutert. Beim Zugriff auf weitere Webseiten des Werbeträgers 5 durch den Nutzer 1 (Teilschritt "a" in der Fig. 5) erkennt der Adserver 7 des jeweiligen Werbeträgers 5 das von ihm abgelegte Adserver-Cookie 10.1, 10.2, 10.3. Falls vom Nutzer 1 kein Sperr-Cookie 9.1, 9.2, 9.3 übermittelt wurde, erstellt der Adserver 7 des jeweiligen Werbeträgers 5 mithilfe des Adserver-Cookies 10.1, 10.2, 10.3 ein Tag-in-Tag, mit dem der Adserver 7 des Werbeträgers 5 die Übermittlung von Werbeinhalten an die zentrale Steuereinheit 4 delegiert (Teilschritte "b" und "c" in der Fig. 5). Falls hingegen bei einem nachfolgenden Zugriff auf die Werbeplattform eines Werbeträgers 5 durch den Nutzer 1 gemeinsam mit dem Adserver-Cookie 10.1, 10.2, 10.3 auch ein Sperr-Cookie 9.1, 9.2, 9.3 übermittelt wird, so hemmt der jeweilige Adserver 7.1, 7.2, 7.3 des betreffenden Werbeträgers 5 die Übermittlung von Werbeinhalten, da offensichtlich die vorgegebene Zeitspanne zur verzögerten Auslieferung von Werbeinhalten noch nicht abgelaufen ist.

Mithilfe der Sperr-Cookies 9.1, 9.2, 9.3 kann auch im Rahmen der zweiten Ausführungsform des erfindungsgemäßen Verfahrens eine zu zeitige Auslieferung von nutzerspezifischen Werbeinhalten vermieden werden, obwohl der Adserver 7 des Werbeträgers 5 alleine anhand des übermittelten Adserver-Cookies 10.1, 10.2, 10.3 nicht feststellen kann, ob die vorgegebene Zeitspanne für die verzögerte Auslieferung nutzerspezifischer Werbeinhalte bereits abgelaufen ist.

Mithilfe des erfindungsgemäßen Verfahrens kann somit eine nutzerspezifische Steuerung von Werbeinhalten in einem Informationsnetzwerk erreicht werden, über die gewissermaßen ein direkter Kontakt zwischen einem Werbetreibenden 2 und einem Nutzer 1 erzielt werden kann. Über eine solche nutzerspezifische Steuerung kann eine effektive Nutzerbindung, sowie ein Imageaufbau einer Marke während der Kaufentscheidungsphase gezielt betrieben werden. Das erfindungsgemäße Verfahren basiert dabei auf dem praktisch beobachteten Verhalten der Nutzer 1, sich in der Kaufentscheidungsphase auf der jeweiligen Informationsplattform unterschiedlicher Werbetreibenden 2 zu informieren. Durch das erfindungsgemäße Verfahren wird eine stärkere und nachhaltigere Bindung des Nutzers 1 an die Marke des Werbetreibenden 2 erreicht, sodass das Verhältnis von angesprochenen Nutzern zu konkreten Käufern gesteigert werden kann. Andererseits wird aber auch der Nutzer 1 von unerwünschten Werbeinhalten, die seine Interessen in keiner Weise widerspiegeln, verschont. Somit ergibt sich für alle Beteiligten eine effizientere Nutzung der genannten Informationsnetzwerke ohne unnötigen Einsatz von Zeit- und Geldressourcen.

## Patentansprüche

1. Verfahren zur nutzerspezifischen Steuerung von Werbeinhalten in einem Informationsnetzwerk, das Werbetreibende (2), Werbeträger (5), sowie eine Vielzahl an Nutzer (1) umfasst, wobei die Nutzer (1) über bidirektionale Datenverbindungen mit Informationsplattformen in Form abrufbarer Daten der Werbetreibenden (2), sowie mit Werbeplattformen in Form abrufbarer Daten der Werbeträger (5) verbunden sind, wobei die Bereitstellung von Information durch Zugriff auf die Informationsplattformen und die Werbeplattformen durch die Nutzer (1) erfolgt, und die Werbeinhalte in die Daten der Werbeträger (5) auf ihren jeweiligen Werbeplattformen integriert werden, **dadurch gekennzeichnet, dass** mit der Bereitstellung der Information durch Zugriff auf eine Informationsplattform eines Werbetreibenden (2) durch einen Nutzer (1)
-) in einem ersten Verfahrensschritt eine Benutzungsinformation über den Nutzer (1) und den Werbetreibenden (2) an eine zentrale Steuereinheit (4), sowie an den Nutzer (1) gesendet und beim Nutzer (1) und der zentralen Steuereinheit (4) gespeichert wird,
-) in einem zweiten Verfahrensschritt die Benutzungsinformation bei nachfolgendem Zugriff auf eine Werbeplattform eines Werbeträgers (5) durch den Nutzer (1) vom Nutzer (1) an den Werbeträger (5) übermittelt wird, und in weiterer Folge anhand der Benutzungsinformation eine Benutzeranfrage vom Werbeträger (5) an die zentrale Steuereinheit (4) gesendet wird, wobei die zentrale Steuereinheit (4) die Benutzeranfrage mit ihren gespeicherten Benutzungsinformationen vergleicht, und
-) in einem dritten Verfahrensschritt bei Wiedererkennung des Nutzers (1) mithilfe der gespeicherten Benutzungsinformation von der zentralen Steuereinheit (4) nutzerspezifische Werbeinhalte erstellt und an den Werbeträger (5) zur Ausgabe an den Nutzer (1) übermittelt werden.

2. Verfahren nach Anspruch 1, **dadurch gekennzeichnet, dass** die den Nutzer (1) betreffenden Inhalte der Benutzungsinformation anonymisiert erstellt werden.

3. Verfahren nach Anspruch 1 oder 2, **dadurch gekennzeichnet, dass** das Informationsnetzwerk zumindest teilweise durch das Internet gebildet wird.

4. Verfahren nach Anspruch 3, **dadurch gekennzeichnet, dass** es sich bei der Informationsplattform eines Werbetreibenden (2) um seine Webpräsenz im Internet handelt.

5. Verfahren nach Anspruch 3 oder 4, **dadurch gekennzeichnet, dass** es sich bei der Werbeplattform eines Werbeträgers (5) um seine Webpräsenz im Internet handelt.

6. Verfahren nach Anspruch 4 oder 5, **dadurch gekennzeichnet, dass** im ersten Verfahrensschritt die Benutzungsinformation über den Nutzer (1) und den Werbetreibenden (2) von einer Dotierungssoftware (8) erstellt wird, die in den Webseiten der Webpräsenz des Werbetreibenden (2) eingebettet ist.

7. Verfahren nach Anspruch 6, **dadurch gekennzeichnet, dass** im ersten Verfahrensschritt die Benutzungsinformation von der Dotierungssoftware (8) an die zentrale Steuereinheit (4) gesendet wird, die in weiterer Folge ein Dotierungs-Cookie (3.1) erstellt, das dem Nutzer (1) übermittelt und in den Browser-Cookies des Nutzers (1) gespeichert wird.

8. Verfahren nach einem der Ansprüche 5 bis 7, **dadurch gekennzeichnet, dass** im zweiten Verfahrensschritt eine Erkennungssoftware (6), die in den Webseiten der Webpräsenz des Werbeträgers (5) eingebettet ist, das vom Nutzer (1) übermittelte Dotierungs-Cookie (3.1) erkennt und die Benutzeranfrage an die zentrale Steuereinheit erstellt.

9. Verfahren nach einem der Ansprüche 5 bis 8, **dadurch gekennzeichnet, dass** im zweiten Verfahrensschritt bei Wiedererkennung des Nutzers (1) durch die zentrale Steuereinheit (4) ein Steuerungsbefehl zur Erstellung eines Adserver-Cookies (10.1) an einen Adserver (7) des Werbeträgers (5) übermittelt wird, das vom Adserver (7) dem Nutzer (1) übermittelt und in den Browser-Cookies des Nutzers (1) gespeichert wird.

10. Verfahren nach Anspruch 9, **dadurch gekennzeichnet, dass** im dritten Verfahrensschritt bei nachfolgenden Zugriffen auf die Werbeplattform des Werbeträgers (5) durch den Nutzer (1) der Adserver (7) des Werbeträgers (5) das Adserver-Cookie (10.1) erkennt, und mithilfe des Adserver-Cookies (10.1) ein Tag-in-Tag erstellt, mit dem der Adserver (7) des Werbeträgers (5) die Übermittlung von Werbeinhalten an die zentrale Steuereinheit (4) delegiert.

11. Verfahren nach Anspruch 6, **dadurch gekennzeichnet, dass** im ersten und zweiten Verfahrensschritt die Benutzungsinformation von der Dotierungssoftware (8) an die zentrale Steuereinheit (4) gesendet wird, die in weiterer Folge einen Steuerungsbefehl zur Erstellung eines Adserver-Cookies (10.1, 10.2, 10.3) an die Adserver (7.1, 7.2, 7.3) der Werbeträger (5) übermittelt, das vom jeweiligen Adserver (7.1, 7.2, 7.3) dem Nutzer (1) übermittelt und in den Browser-Cookies des Nutzers (1) gespeichert wird.

12. Verfahren nach Anspruch 11, **dadurch gekennzeichnet, dass** im dritten Verfahrensschritt bei einem nachfolgenden Zugriff auf die Werbeplattform eines Werbeträgers (5) durch den Nutzer (1) der jeweilige Adserver (7.1, 7.2, 7.3) des betreffenden Werbeträgers (5) das Adserver-Cookie (10.1, 10.2, 10.3) erkennt, und mithilfe des Adserver-Cookies (10.1, 10.2, 10.3) ein Tag-in-Tag erstellt, mit dem der jeweilige Adserver (7.1, 7.2, 7.3) des betreffenden Werbeträgers (5) die Übermittlung von Werbeinhalten an die zentrale Steuereinheit (4) delegiert.

13. Verfahren nach einem der Ansprüche 3 bis 12, **dadurch gekennzeichnet, dass** die Übermittlung der nutzerspezifischen Werbeinhalte von der zentralen Steuereinheit (4) an die Werbeplattform des Werbeträgers (5) erst nach Ablauf einer vorgegebenen Zeitspanne ab dem Aufruf der Informationsplattform des Werbetreibenden (2) durch den Nutzer (1) erfolgt.

14. Verfahren nach einem der Ansprüche 11 bis 13, **dadurch gekennzeichnet, dass** gleichzeitig mit der Erstellung des Adserver-Cookies (10.1, 10.2, 10.3) ein Sperr-Cookie (9.1, 9.2, 9.3) erstellt wird, das vom jeweiligen Adserver (7.1, 7.2, 7.3) dem Nutzer (1) übermittelt und in den Browser-Cookies des Nutzers (1) gespeichert wird, wobei das Sperr-Cookie (9.1, 9.2, 9.3) eine vorgegebene Zeitspanne enthält, nach der sich das Sperr-Cookie (9.1, 9.2, 9.3) selbständig löscht.

15. Verfahren nach Anspruch 14, **dadurch gekennzeichnet, dass** im dritten Verfahrensschritt bei einem nachfolgenden Zugriff auf die Werbeplattform eines Werbeträgers (5) durch den Nutzer (1) vor Ablauf der vorgegebenen Zeitspanne und der damit verbundenen Übermittlung des Sperr-Cookies (9.1, 9.2, 9.3) der jeweilige Adserver (7.1, 7.2, 7.3) des betreffenden Werbeträgers (5) die Übermittlung von Werbeinhalten hemmt, und nur bei fehlender Übermittlung des Sperr-Cookies (9.1, 9.2, 9.3) mithilfe des Adserver-Cookies (10.1, 10.2, 10.3) ein Tag-in-Tag erstellt, mit dem der jeweilige Adserver (7.1, 7.2, 7.3) des betreffenden Werbeträgers (5) die Übermittlung von Werbeinhalten an die zentrale Steuereinheit (4) delegiert.
